Europäisches Patentamt

European Patent Office

Office européen des brevets

(19)

(11) **EP 0 689 926 B1**

(12) **FASCICULE DE BREVET EUROPEEN**

(45) Date de publication et mention
de la délivrance du brevet:
**12.04.2000 Bulletin 2000/15**

(51) Int Cl.7: **B29C 55/14**, C08J 5/18

(21) Numéro de dépôt: **95420153.9**

(22) Date de dépôt: **12.06.1995**

(54) **Films polyester utilisables pour l'operculage et leur procédé de préparation**

Als Verpackungsverschluss verwendbare Polyesterfolien und Verfahren zu ihrer Herstellung

Polyester films utilizable for sealing containers and method for their production

(84) Etats contractants désignés:
**AT BE CH DE DK ES FR GB GR IE IT LI LU NL PT SE**

(30) Priorité: **01.07.1994 FR 9408369**

(43) Date de publication de la demande:
**03.01.1996 Bulletin 1996/01**

(73) Titulaire: **TORAY PLASTICS EUROPE SA**
**01701 Saint-Maurice-de-Beynost (FR)**

(72) Inventeurs:
• **Benhayoun, Jean-Paul**
 **F-69100 Villeurbanne (FR)**

• **Marze, Alain**
 **F-69680 Chassieu (FR)**
• **Melquioni, Brunot**
 **F-69008 Lyon (FR)**

(74) Mandataire: **Kügele, Bernhard et al**
**NOVAPAT INTERNATIONAL SA,**
**9, Rue du Valais**
**1202 Genève (CH)**

(56) Documents cités:
**EP-A- 0 279 611         EP-A- 0 378 955**
**EP-A- 0 386 707         EP-A- 0 390 191**
**EP-A- 0 402 861         FR-A- 2 046 754**
**US-A- 3 702 357         US-A- 4 985 537**

EP 0 689 926 B1

## Description

La présente invention concerne des films en polytéréphtalate d'alkylènediol possédant des propriétés les rendant aptes à l'operculage, notamment des pôts pour produits laitiers frais tels que les yaourts, fromages ou desserts.

De façon très générale, les yaourts, d'autres produits laitiers tels que fromages frais, petits suisses notamment, ou divers desserts sont présentés en pôts, le plus souvent en polystyrène. L'operculage de tels pôts est de plus en plus fréquemment réalisé en films complexes souples, à base de films minces en polyester, par opposition aux classiques feuilles en aluminium. Parmi les films complexes utilisés, on trouve souvent des structures film polyester (éventuellement métallisé) revêtu d'une part d'un papier imprimable et comportant d'autre part une laque scellable-pelable.

De tels opercules doivent, outre une présentation finale attractive, répondre à diverses caractéristiques de mise en oeuvre, de protection des aliments et d'ouverture facile par l'utilisateur. Ces caractéristiques proviennent de l'impression sur le papier pour la présentation, de l'enduction thermoscellable pour la force de scellage et la pelabilité et enfin du film polyester pour la résistance à la déchirure.

La conception du conditionnement des produits dans ce type d'application est telle que le pelage est réalisé dans les directions diagonales, c'est-à-dire à +45 et à -45 degrés par rapport à la présentation globale du film (direction machine). Il est donc nécessaire que l'opercule puisse être ouvert de cette façon, sans qu'il y ait déchirure. L'expérience montre que cela n'est pas systématiquement obtenu avec les films polyester, ayant une épaisseur usuelle dans cette application, fabriqués industriellement par les procédés les plus courants. Il s'avère en effet que globalement, pour des films industriels ayant une largeur totale (appelée laize) de plusieurs mètres, seule la partie médiane répond aux caractéristiques souhaitées, tandis que les parties latérales, représentant généralement près de 70 % de la largeur totale du film, ne sont pas utilisables pour ce type d'application. Cela induit bien évidemment une gestion complexe de la production des films, puisqu'une partie peut être commercialisée pour l'operculage, tandis qu'une autre partie plus importante doit être affectée à d'autres utilisations. Il est en outre à noter que les quantités relatives utilisables dans l'operculage et dans les autres applications ne correspondent pas systématiquement aux quantités disponibles des différentes qualités de films.

Il est donc tout à fait souhaitable de pouvoir, d'une part caractériser lors de leur fabrication, par des mesures de propriétés bien définies, les films convenant à l'operculage et, d'autre part de manière primordiale augmenter pour un procédé donné de fabrication du film polyester, le pourcentage dudit film convenant à cette application visée.

La présente invention se propose d'apporter une solution à ces problèmes. EP-A-0.378.955 décrit un procédé de préparation d'un film polyester semi-cristallin orienté présentant une biréfringence planaire $\Delta p$ supérieure ou égale à 0,165, dans lequel le film est biétiré avec un taux d'étirage longitudinal de 3 à 5 et un taux d'étirage transversal de 3 à 5 et en ce qu'il est thermofixé à une température comprise entre 200 et 240°C. Ces films polyesters sont utilisés notamment pour la préparation, par extrusion-couchage, de films composites utilisés dans le domaine de l'emballage comme bande de scellage pour assurer l'étanchéité de récipients destinés à contenir des liquides.

Un des objets de la présente invention consiste en des films en polytéréphtalate d'alkylènediol ayant une épaisseur de 5 à 30 micromètres, caractérisés en ce qu'ils présentent les propriétés suivantes :

- un taux de cristallinité supérieur ou égal à 50 %,
- une biréfringence planaire $\Delta P \leq 0,160$,
- une résistance à la rupture dans la direction longitudinale (RRMD) et la plus faible des deux résistances à la rupture dans les directions diagonales ($\pm 45$ degrés par rapport à la direction longitudinale) (RR45) telles que : (RRMD) + (RR45) $\leq 40$ kg/mm$^2$ (392,4 MPa),
- un allongement à la rupture dans la direction longitudinale (ARMD) et le plus fort des deux allongements à la rupture dans les directions diagonales ($\pm 45$ degrés par rapport à la direction longitudinale) (AR45) tels que : (ARMD) + (AR45) $\geq 290$ % et en ce qu'ils satisfont au test d'usage décrit ci-après.

Les tests mis en oeuvre, pour vérifier la bonne adaptation des films à l'emploi pour l'operculage, relèvent de pratiques bien connues dans la profession. Il s'agit dans tous les cas de simuler l'usage réel, en effectuant le "désoperculage" d'un complexe papier-film polyester-laque thermoscellable dans les deux directions diagonales, sur une feuille de polystyrène : soit par un simple scellage linéaire d'éprouvettes, soit par un scellage reproduisant celui du pôt à operculer, soit encore par la mise en pratique sur machine pilote de pôts réels.

Le test d'usage utilisé dans la présente invention répond à la première catégorie des tests indiqués précédemment. Il est effectué de la manière suivante.

Le complexe est réalisé comme suit. Le film polytéréphtalate d'alkylènediol, nu ou métallisé, est complexé sur l'une de ses faces avec le papier (à 45g/m$^2$), puis est enduit sur l'autre face à l'aide d'une laque thermoscellable.

Le test est réalisé sur des éprouvettes rectangulaires de complexe polyester/papier ayant toutes les mêmes dimensions.

Le scellage est réalisé à l'aide d'un fer de scellage composé d'une mâchoire supérieure chaude portant un jonc de 2 à 3 mm de diamètre et d'une mâchoire inférieure chaude plane. La température de scellage est de l'ordre de 200 °C. La force d'appui est de l'ordre de 2,5 kg/cm$^2$ (245 KPa) et le temps de scellage de l'ordre de 1 seconde.

Le complexe polyester/papier est disposé du côté du jonc, le polystyrène du côté de la mâchoire plane.

On réalise sur chaque éprouvette la soudure du complexe PET/papier sur son support en polystyrène. On attend le refroidissement complet de l'échantillon avant de simuler le désoperculage, en tirant manuellement sur le complexe polyester/papier pour le détacher de la feuille de polystyrène.

Les forces de scellage sont typiquement de l'ordre de 500 à 800 g/cm$^2$ (49 à 78,5 KPa). Le résultat du test dépend du nombre de déchirures du complexe polyester/papier, au cours de l'opération de désoperculage de 10 éprouvettes. D'une manière générale, le complexe polyester/papier doit se désoperculer sans se déchirer.

Dans le cas où il ne se produit pas plus d'une déchirure sur les dix éprouvettes, le résultat du test est considéré comme bon.

Dans le cas où il se produit deux à trois déchirures sur les dix éprouvettes, le résultat du test est considéré comme moyen.

Au-delà de trois déchirures, le résultat du test est considéré comme mauvais.

Les films de l'invention sont considérés comme satisfaisants selon le test d'usage, si le résultat du test est bon ou moyen et préférentiellement si le résultat du test est bon.

Les films de l'invention peuvent également être soumis à un test normalisé de déchirure : méthode ELMENDORF - Norme ISO 6383/2 - 1983(F).

Selon ce test, on effectue des mesures de résistance à la déchirure dans les directions diagonales définies précédemment (±45 degrés par rapport à la direction longitudinale). Le critère retenu est la valeur absolue de la différence entre la résistance à la déchirure dans l'une des directions diagonales et la résistance à la déchirure dans l'autre direction diagonale (ΔRD45).

Les films de l'invention présentent à ce test un ARD45 inférieur ou égal à 6,55 Newton/mm et de préférence inférieur ou égal à 5,7 Newton/mm.

La biréfringence planaire ΔP est représentée par la relation $(n_1+n_2)/2 - n_3$, dans laquelle $n_1$, $n_2$ et $n_3$ représentent les indices de réfraction mesurés sur le film, $n_1$ étant le plus grand indice de réfraction dans le plan du film, $n_2$ étant le plus petit indice de réfraction dans le plan du film et $n_3$ étant l'indice de réfraction mesuré selon la normale au plan du film.

Les indices de réfraction $n_1$, $n_2$ et $n_3$ sont mesurés au moyen d'un réfractomètre d'ABBE, par la méthode de R.J. Samuels décrite dans J. Appl. Polymer Sci. Vol. 26, pages 1383-1412 (1981).

Détermination de la cristallinité :

- la densité d des échantillons peut être calculée à partir de l'indice moyen $n = (n_1+n_2+n_3)/3$, d'après la relation donnée par A.J. De Vries, C. Bonnebat et J. Beautemps dans J. Polym. Sci., Polym. Phys. Edn, vol. 58, page 109 (1977) :

$$d = 4,028 \ (n^2-1)/(n^2+2) \ ;$$

- si l'on considère un modèle à deux phases, $d_a$ étant la densité de la phase amorphe et $d_c$ la densité de la phase cristalline, la cristallinité X sera donnée par :

$$X = (d-d_a)/(d_c-d_a) \ ;$$

dans le présent texte et notamment dans les exemples les valeurs adoptées pour $d_a$ et $d_c$ sont respectivement 1,335 et 1,455, qui sont les plus utilisées dans la littérature (R. Daubeny, C.W. Bunn, C.J. Brown, Proc. Roy. Soc. London, 226, 531 - 1954).

Les mesures de résistance à la rupture et d'allongement à la rupture sont faites selon la norme ASTM D-882 C7.

De préférence les films de l'invention tels que définis précédemment présentent une résistance à la rupture dans la direction longitudinale (RRMD) et la plus faible des deux résistances à la rupture dans les directions diagonales (RR45) telles que: (RRMD) + (RR45) ≤ 36 kg/mm$^2$ (353,2 MPa), et un allongement à la rupture dans la direction longitudinale (ARMD) et le plus fort des deux allongements à la rupture dans les directions diagonales (AR45) tels que: (ARMD) + (AR45) ≥ 320 %.

Généralement la résistance à la rupture dans la direction longitudinale (RRMD) et la plus faible des deux résistances à la rupture dans les directions diagonales (RR45) sont telles que: (RRMD) + (RR45) ≥ 25 kg/mm$^2$ (245,2

MPa) et l'allongement à la rupture dans la direction longitudinale (ARMD) et le plus fort des deux allongements à la rupture dans les directions diagonales (AR45) sont tels que: (ARMD) + (AR45) ≤ 420 %.

Il est également préféré que les films selon l'invention présentent un taux de cristallinité supérieur ou égal à 52 %.

Un autre objet de l'invention concerne plus particulièrement les films, notamment les films industriels, qui présentent les caractéristiques définies précédemment sur au moins 50 % de la laize et encore préférentiellement sur au moins 60 % de la laize.

Une autre caractéristique des films selon l'invention, qui peut être mise en évidence au centre de la laize, consiste en ce que l'indice de réfraction dans la direction longitudinale (direction machine) $n_{MD}$, dans la direction transversale $n_{TD}$ et dans la direction normale au plan du film $n_Z$, sont tels qu'ils répondent aux relations:

$$\Delta n_{1,2}/\Delta P \geq 0{,}200 \tag{1}$$

$$\Delta n_{2,3} + \Delta P \leq 0{,}304 \tag{2}$$

\* $\Delta n_{1,2}$ dans la relation (1) représentant la différence entre les indices $n_1$ et $n_2$,

\* $\Delta n_{2,3}$ dans la relation (2) représentant la différence entre les indices $n_2$ et $n_3$,

$n_1$, $n_2$ et $n_3$ correspondant respectivement à $n_{TD}$, $n_{MD}$ et $n_Z$ lorsque les indices sont mesurés au centre de la laize.

Pour les applications principalement visées, les films de l'invention ont de préférence une épaisseur de 8 micromètres à 15 micromètres.

Le polytéréphtalate d'alkylènediol constituant les films de l'invention peut être choisi parmi les polytéréphtalates d'alkylènediol auxquels on fait appel habituellement pour l'obtention de films semi-cristallins bi-orientés. Il s'agit de polytéréphtalates d'alkylènediol linéaires filmogènes, cristallisables par orientation et obtenus de façon usuelle à partir de l'acide téréphtalique ou ses dérivés (esters d'alcools aliphatiques inférieurs ou halogénures par exemple) et d'un ou plusieurs glycols aliphatiques. Ces acides peuvent être associés à une quantité mineure d'un ou plusieurs acides dicarboxyliques aromatiques, aliphatiques ou cycloaliphatiques, tels que les acides phtalique, isophtalique, naphtalènedicarboxylique-2,5; naphtalènedicarboxylique-2,6, adipique, azélaïque, hexahydrotéréphtalique. Comme exemples non limitatifs de diols aliphatiques, on peut citer l'éthylèneglycol ; le propanediol-1,3 ; le butanediol-1,4. Ces diols peuvent être associés à une quantité mineure d'un ou plusieurs diols aliphatiques plus condensés en carbone (néopentylglycol par exemple) ou cycloaliphatiques (cyclohexanediméthanol).

Préférentiellement, le polytéréphtalate d'alkylènediol est choisi parmi, le polytéréphtalate d'éthylèneglycol (PET) ou de butanediol-1,4 ou des copolyesters comportant au moins 80 % en moles de motifs téréphtalate d'alkylèneglycol.

Le polytéréphtalate d'alkylènediol constituant le film peut comporter une ou plusieurs charges inertes pour lui conférer en particulier un glissant suffisant. Ces charges sont généralement des charges minérales, telles que par exemple la silice, le dioxyde de titane, le dioxyde de zirconium, l'alumine, les mélanges silice/alumine, les silicates, le carbonate de calcium, le sulfate de baryum. Ces charges peuvent également être constituées de particules de polymères.

Le diamètre médian en volume des charges est en général compris entre 1 et 10 micromètres et de préférence entre 1 et 5 micromètres.

La teneur en charge du film est habituellement comprises entre 0,02 % et 1 % en poids par rapport au poids du polyester.

La présente invention consiste également en un procédé de préparation d'un film en polytéréphtalate d'alkylènediol, étiré biaxialement, ayant une épaisseur de 5 à 30 micromètres, satisfaisant au test d'usage décrit précédemment, et présentant les propriétés indiquées précédemment, caractérisé en ce que le polytéréphtalate d'alkylènediol mis en oeuvre présente un indice de viscosité, mesurée dans un mélange 50/50 en poids de phénol et de dichloro-1,2 benzène selon la norme ISO 1628-5, compris entre 55 ml/g et 75 ml/g, en ce que le film est biétiré avec un taux d'étirage planaire inférieur ou égal à 12 et en ce qu'il est thermofixé à une température supérieure ou égale à 227°C.

De préférence, la thermofixation du film après le biétirage est conduite à une température de 235°C à 260°C pendant une durée de quelques secondes.

Le taux d'étirage planaire est le produit du taux d'étirage du film dans une direction par le taux d'étirage dans la direction perpendiculaire, c'est-à-dire le produit du taux d'étirage longitudinal (étirage machine) et du taux d'étirage transversal, quel que soit l'ordre de ces étirages : biétirage en séquence normale (d'abord en long, puis en travers) ou inverse (étirage en travers, puis en long).

Le taux d'étirage planaire convenable est obtenu de préférence avec un taux d'étirage longitudinal de 2,0 à 4,0 et avec un taux d'étirage transversal de 3,0 à 5,0.

Encore plus préférentiellement le taux d'étirage longitudinal utilisé est de 2,5 à 3,5 et le taux d'étirage transversal utilisé est de 3,5 à 4,5.

Généralement le taux d'étirage planaire est égal ou supérieur à 6.

Il a été observé qu'un polytéréphtalate d'éthylèneglycol, dont l'indice de viscosité, selon la norme indiquée précédemment, est compris entre 58 ml/g et 70 ml/g, convient tout particulièrement bien pour l'obtention d'un film présentant les propriétés requises pour être utilisé dans l'operculage.

Hormis la sélection décrite ci-avant des paramètres de taux d'étirage planaire, d'indice de viscosité du polytéréphtalate d'alkylènediol et de température de thermofixation, les modalités de préparation du film sont celles que l'on utilise habituellement pour ce type de film polyester dans le domaine de l'emballage.

Les exemples qui suivent illustrent l'invention.

## EXEMPLES 1 A 4 ET ESSAIS COMPARATIFS A, B ET C

Dans ces exemples, on utilise un polytéréphtalate d'éthylèneglycol (PET) ayant un indice de viscosité (mesuré selon la norme indiquée précédemment) de 67 ml/g, une température de transition vitreuse (Tg) de 80°C (mesurée à 20°C/min sur un appareil d'analyse thermique différentielle DUPONT 1090) et une température de cristallisation (Tc) de 170°C (mesurée dans les mêmes conditions que la Tg) et contenant 0,1 % en poids d'une charge constituée par des particules de silice ayant un diamètre médian en volume de 3,5 pm.

Le PET est extrudé à l'état fondu à travers une filière à fente, sous forme d'un film épais que l'on refroidit à 20°C par placage électrostatique sur un tambour de refroidissement, de manière à former un film amorphe. Le film amorphe ainsi obtenu est ensuite soumis à un étirage longitudinal MD, à une température de 110°C et avec un taux indiqué dans le tableau 1 ci-après (Taux EL), par passage successivement sur un rouleau lent, puis sur un rouleau rapide à 20°C. Puis le film monoétiré est soumis à un étirage transversal à 125°C avec un taux indiqué dans le tableau 1 (Taux ET).

Le film biétiré (ayant 12 μm d'épaisseur) est ensuite soumis à une thermofixation à une température indiquée dans le tableau 1.

La mesure des indices de réfraction, des allongements à la rupture et des résistances à la rupture est effectuée comme décrit précédemment.

Enfin les films sont soumis au test d'usage et au test de déchirure ELMENDORF également décrits précédemment.

Le tableau 1 rassemble les taux d'étirage des films (Taux PL pour le taux d'étirage planaire) et la température de thermofixation (Thermo) mise en oeuvre.

Le tableau 2 rassemble les indices de réfraction, les valeurs données par application des relations (1) et (2), ainsi que le résultat du test d'usage.

Le tableau 3 rassemble la valeur de ΔP, le taux de cristallinité (X %) du polyester utilisé, les valeurs des allongements (ARMD et AR45) et des résistances à la rupture (RRMD et RR45 en kg/mm$^2$ ,et en MPa entre parenthèses), le résultat du test d'usage (satisfaisant = oui ; non-satisfaisant = non) et le ΔRD45 en N/mm.

Tableau 1

| Exemples | Taux EL | Taux ET | Taux PL | Thermo (°C) |
|---|---|---|---|---|
| Exemple 1 | 3,0 | 3,8 | 11,4 | 235 |
| Exemple 2 | 3,0 | 3,8 | 11,4 | 240 |
| Exemple 3 | 3,1 | 3,8 | 11,8 | 230 |
| Exemple 4 | 3,0 | 3,8 | 11,4 | 230 |
| Essai A | 3,2 | 3,8 | 12,2 | 225 |
| Essai B | 3,1 | 3,8 | 11,8 | 225 |
| Essai C | 3,45 | 4,15 | 14,3 | 237 |

Tableau 2

| Exemples | $n_{TD}$ ($n_1$) | $n_{MD}$ ($n_2$) | $n_Z$ ($n_3$) | Relation 1 | Relation 2 | Test |
|---|---|---|---|---|---|---|
| Exemple 1 | 1,6785 | 1,6380 | 1,5025 | 0,259 | 0,2913 | oui |
| Exemple 2 | 1,6793 | 1,6342 | 1,5041 | 0,295 | 0,2826 | oui |
| Exemple 3 | 1,6760 | 1,6420 | 1,4991 | 0,212 | 0,3029 | oui |
| Exemple 4 | 1,6764 | 1,6404 | 1,5010 | 0,228 | 0,2964 | oui |
| Essai A | 1,6709 | 1,6470 | 1,4977 | 0,148 | 0,3103 | non |
| Essai B | 1,6737 | 1,6435 | 1,4985 | 0,188 | 0,3055 | non |
| Essai C | 1,6746 | 1,6472 | 1,4979 | 0,167 | 0,3120 | non |

| Exemples | ΔP | X % | RRMD | RR45 | RRMD +RR45 | ARMD | AR45 | ARMD +AR45 | Test | ΔRD45 (N/mm) |
|---|---|---|---|---|---|---|---|---|---|---|
| Ex 1 | 0,1558 | 53,5 | 17,5 (171,7) | 16,3 (159,9) | 33,8 (331,6) | 160 % | 195 % | 355 % | oui | 4,9 |
| Ex 2 | 0,1526 | 52,6 | 16,2 (158,9) | 16,5 (161,9) | 32,7 (320,8) | 180 % | 180 % | 360 % | oui | 3,1 |
| Ex 3 | 0,1599 | 52,4 | 18,7 (183,4) | 19,9 (195,2) | 38,6 (378,6) | 149 % | 146 % | 295 % | oui | 5,4 |
| Ex 4 | 0,1574 | 52,7 | 19,0 (186,4) | 20,2 (198,2) | 39,2 (384,6) | 161 % | 156 % | 317 % | oui | 6,2 |
| Essai A | 0,1613 | 51,4 | 21,4 (209,9) | 22,1 (216,8) | 43,5 (426,7) | 146 % | 141 % | 287 % | non | 7,85 |
| Essai B | 0,1601 | 51,5 | 19,6 (192,3) | 21,2 (208,0) | 40,8 (400,3) | 141 % | 144 % | 285 % | non | 6,05 |
| Essai C | 0,163 | 53,9 | 20,7 (203,1) | 21,5 (210,9) | 42,2 (414,0) | 132 % | 151 % | 283 % | non | 6,9 |

**Tableau 3**

**Revendications**

1. Films en polytéréphtalate d'alkylènediol, ayant une épaisseur de 5 à 30 micromètres, caractérisés en ce qu'ils présentent les propriétés suivantes :

   - un taux de cristallinité supérieur ou égal à 50 %,

- une biréfringence planaire ΔP≤ 0,160,
- une résistance à la rupture dans la direction longitudinale (RRMD) et la plus faible des deux résistances à la rupture dans les directions diagonales (±45 degrés par rapport à la direction longitudinale) (RR45) telles que : (RRMD) + (RR45) ≤ 40 kg/mm$^2$ (392,4 MPa),
- un allongement à la rupture dans la direction longitudinale (ARMD) et le plus fort des deux allongements à la rupture dans les directions diagonales (±45 degrés par rapport à la direction longitudinale) (AR45) tels que: (ARMD) + (AR45) ≥ 290 % et en ce qu'ils satisfont au test d'usage décrit.

**2.** Films selon la revendication 1, caractérisés en ce qu'ils présentent au test d'ELMENDORF une valeur absolue de la différence entre la résistance à la déchirure dans l'une des directions diagonales et la résistance à la déchirure dans l'autre direction diagonale (ΔRD45) inférieure ou égale à 6,55 Newton/mm et de préférence inférieure ou égale à 5,7 Newton/mm.

**3.** Films selon l'une des revendications 1 ou 2, caractérisés en ce qu'ils présentent une résistance à la rupture dans la direction longitudinale (RRMD) et la plus faible des deux résistances à la rupture dans les directions diagonales (RR45) telles que : (RRMD) + (RR45) ≤ 36 kg/mm$^2$ (353,2 MPa), et un allongement à la rupture dans la direction longitudinale (ARMD) et le plus fort des deux allongements à la rupture dans les directions diagonales (AR45) tels que : (ARMD) + (AR45) ≥ 320 %.

**4.** Films selon l'une des revendications 1 à 3, caractérisés en ce que la résistance à la rupture dans la direction longitudinale (RRMD) et la plus faible des deux résistances à la rupture dans les directions diagonales (RR45) sont telles que: (RRMD) + (RR45) ≥ 25 kg/mm$^2$ (245,2 MPa) et l'allongement à la rupture dans la ≥ direction longitudinale (ARMD) et le plus fort des deux allongements à la rupture dans les directions diagonales (AR45) sont tels que : (ARMD) + (AR45) ≤ 420 %.

**5.** Films selon l'une des revendications 1 à 4, caractérisés en ce qu'ils présentent un taux de cristallinité supérieur ou égal à 52 %.

**6.** Films selon l'une des revendications 1 à 5, caractérisés en ce que le polytéréphtalate d'alkylènediol est choisi parmi le polytéréphtalate d'éthylèneglycol ou de butanediol-1,4 et les copolyesters comportant au moins 80 % en moles de motifs téréphtalate d'alkylèneglycol.

**7.** Films selon l'une des revendications 1 à 6, caractérisés en ce qu'au centre de la laize, l'indice de réfraction dans la direction longitudinale (direction machine) $n_{MD}$, dans la direction transversale $n_{TD}$ et dans la direction normale au plan du film $n_Z$, sont tels qu'ils répondent aux relations:

$$\Delta n_{1.2}/\Delta P \geq 0,200 \qquad\qquad (1)$$

$$\Delta n_{2.3} + \Delta P \leq 0,304 \qquad\qquad (2)$$

- $\Delta n_{1.2}$ dans la relation (1) représentant la différence entre les indices $n_1$ et $n_2$,
- $\Delta n_{2.3}$ dans la relation (2) représentant la différence entre les indices $n_2$ et $n_3$,

$n_1$, $n_2$ et $n_3$ correspondant respectivement à $n_{TD}$, $n_{MD}$ et $n_Z$ lorsque les indices sont mesurés au centre de la laize.

**8.** Procédé de préparation d'un film en polytéréphtalate d'alkylènediol selon l'une des revendications 1 à 7, caractérisé en ce que le polytéréphtalate d'alkylènediol mis en oeuvre présente un indice de viscosité mesuré selon la norme ISO 1628-5 compris entre 55 ml/g et 75 ml/g, en ce que le film est biétiré avec un taux d'étirage planaire inférieur ou égal à 12 et en ce qu'il est thermofixé à une température supérieure ou égale à 227°C.

**9.** Procédé selon la revendication 8, caractérisé en ce que le taux d'étirage planaire convenable est obtenu avec un taux d'étirage longitudinal de 2,0 à 4,0 et de préférence de 2,5 à 3,5.

**10.** Procédé selon l'une des revendications 8 ou 9, caractérisé en ce que le taux d'étirage planaire convenable est obtenu avec un taux d'étirage transversal de 3,0 à 5,0 et de préférence de 3,5 à 4,5.

**EP 0 689 926 B1**

**11.** Procédé selon l'une des revendications 8 à 10, caractérisé en ce que la thermofixation du film après le biétirage est conduite à une température de 235°C à 260°C pendant une durée de quelques secondes.

**12.** Procédé selon l'une des revendications 8 à 11, caractérisé en ce que l'on met en oeuvre comme polytéréphtalate d'alkylènediol un polytéréphtalate d'éthylèneglycol dont l'indice de viscosité est compris entre 58 ml/g et 70 ml/g.

**Patentansprüche**

**1.** Folien aus Alkylendiol-Polyterephthalate mit einer Dicke von 5 bis 30 µm, dadurch gekennzeichnet, dass sie die folgenden Eigenschaften aufweisen:

- einen Kristallinitätsgrad $\geq 50\%$,
- eine planare Doppelbrechung $\Delta P \leq 0,160$,
- eine Reissfestigkeit in Längsrichtung (RRMD) und die schwächste der beiden Reissfestigkeiten in den Diagonalrichtungen ($\pm 45°$ im Verhältnis zur Längsrichtung) (RR45) derart, dass (RRMD) + (RR45) $\leq 40$ kg/mm$^2$ (392,4 MPa) ist,
- eine Reissdehnung in Längsrichtung (ARMD) und die stärkste der beiden Reissdehnungen in den Diagonalrichtungen ($\pm 45°$ im Verhältnis zur Längsrichtung) (AR45) derart, dass (ARMD) + (AR45) $\geq 290\%$ ist, so dass der beschriebene Gebrauchstest erfüllt wird.

**2.** Folien nach Anspruch 1, dadurch gekennzeichnet, dass im ELMENDORF Test der Absolutwert der Differenz zwischen dem Reisswiderstand in einer der Diagonalrichtungen und dem Reisswiderstand in der anderen Diagonalrichtung ($\Delta$RD45) $\leq 6,55$ N/mm, und vorzugsweise $\leq 5,7$ N/mm ist.

**3.** Folien nach Anspruch 1 oder 2, dadurch gekennzeichnet, dass sie einen Reisswiderstand in Längsrichtung (RRMD) und die schwächste der beiden Reissfestigkeiten in den Diagonalrichtungen (RR45) derart aufweisen, dass (RRMD) + (RR45) $\leq 36$ kg/mm$^2$ (353,2 MPa) ist, und eine Reissdehnung in Längsrichtung (ARMD) und die stärkste der beiden Reissdehnungen in den Diagonalrichtungen (AR45) derart aufweisen, dass (ARMD) + (AR45) $\geq 320\%$ ist.

**4.** Folien nach einem der Ansprüche 1 bis 3, dadurch gekennzeichnet, dass sie einen Reisswiderstand in Diagonalrichtung (RRMD) und die schwächste der beiden Reissfestigkeiten in den Diagonalrichtungen (RR45) derart aufweisen, dass (RRMD) + (RR45) $\geq 25$ kg/mm$^2$ (245,2 MPa) ist, und eine Reissdehnung in Längsrichtung (ARMD) und die stärkste der beiden Reissdehnungen in den Diagonalrichtungen (AR45) derart aufweisen, dass (ARMD) + (AR45) $\leq 420\%$ ist.

**5.** Folien nach einem der Ansprüche 1 bis 4, dadurch gekennzeichnet, dass sie einen Kristallinitätsgrad $\geq 52\%$ aufweisen.

**6.** Folien nach einem der Ansprüche 1 bis 5, dadurch gekennzeichnet, dass das Alkylendiol-Polyterephthalat ein Ethylenglycol-Polyterephthalat oder ein Butandiol-1,4-Polyterephthalat ist und die Copolyester wenigstens 80 Mol-% Alkylenglycol-Terephthalat-Einheiten aufweisen.

**7.** Folien nach einem der Ansprüche 1 bis 6, dadurch gekennzeichnet, dass in der Mitte der Bahnbreite die Brechungsindices in Längsrichtung (Maschinenlaufrichtung) $n_{MD}$, in der Querrichtung $n_{TD}$ und in der Richtung senkrecht zur Folienebene $n_Z$ derart sind, dass sie den folgenden Bedingungen genügen:

$$\Delta n_{1.2}/\Delta P \geq 0,200 \qquad (1)$$

$$\Delta n_{2.3} + \Delta P \leq 0,304 \qquad (2)$$

wobei

- $\Delta n_{1.2}$ in der Gleichung (1) die Differenz zwischen den Indices $n_1$ und $n_2$ darstellt,

- $\Delta n_{2.3}$ in der Gleichung (2) die Differenz zwischen den Indices $n_2$ und $n_3$ darstellt, und
- $n_1$, $n_2$ und $n_3$ jeweils den Werten $n_{TD}$, $n_{MD}$ und $n_Z$ entsprechen, wenn die Indices in der Mitte der Bahnbreite gemessen werden.

8. Verfahren zur Herstellung einer Folie aus Alkylendiol-Polyterephthalat nach einem der Ansprüche 1 bis 7, dadurch gekennzeichnet, dass das verwendete Alkylendiol-Polyterephthalat einen Viskositätsindex, gemessen nach der Isonorm 1628-5, zwischen 55 und 75 ml/g aufweist, und dass die Folie bidirektional mit einem planaren Reckgrad $\leq 12$ gereckt und bei einer Temperatur $\geq 227°C$ thermofixiert wird.

9. Verfahren nach Anspruch 8, dadurch gekennzeichnet, dass der gewünschte planare Reckungsgrad mit einem Reckungsgrad in Längsrichtung von 2,0 bis 4,0 - vorzugsweise von 2,5 bis 3,5 - erzielt wird.

10. Verfahren nach einem der Ansprüche 8 oder 9, dadurch gekennzeichnet, dass der gewünschte planare Reckungsgrad mit einem Reckungsgrad in Querrichtung von 3,0 bis 5,0 - vorzugsweise von 3,5 bis 4,5 - erreicht wird.

11. Verfahren nach einem der Ansprüche 8 bis 10, dadurch gekennzeichnet, dass die Thermofixierung der Folie nach der Reckung in zwei Richtungen während der Dauer von einigen Sekunden bei einer Temperatur von 235 bis 260°C durchgeführt wird.

12. Verfahren nach einem der Ansprüche 8 bis 11, dadurch gekennzeichnet, dass man als Alkylendiol-Polyterephthalat ein Ethylenglycol-Polyterephthalat einsetzt, dessen Viskositätsindex zwischen 58 und 70 ml/g liegt.

**Claims**

1. Films made of polyterephthalate of an alkylenediol which have a thickness of 5 to 30 micrometres, characterised in that they exhibit the following properties :

   - a crystallinity higher than or equal to 50 %,
   - a planar birefringence $\Delta P \leq 0.160$,
   - a tensile strength in the lengthwise direction (MDTS) and the lower of the two tensile strengths in the diagonal directions ($\pm$ 45 degrees relative to the lengthwise direction) (TS45) which are such that :

$$(MDTS) + (TS45) \leq 40 \text{ kg/mm}^2 \text{ (392.4 MPa)},$$

   - an elongation at break in the lengthwise direction (MDEB) and the higher of the two elongations at break in the diagonal directions ($\pm$ 45 degrees relative to the lengthwise direction) (EB45) which are such that : (MDEB) + (EB45) $\geq$ 290 %, and in that they satisfy the use test described.

2. The films according to claim 1, characterised in that in the ELMENDORF test they exhibit an absolute value of the difference between tear resistance in one of the diagonal directions and the tear resistance in the other diagonal direction ($\Delta TR45$) lower than or equal to 6.55 Newton/mm, and preferably lower than or equal to 5.7 Newton/mm.

3. The films according to one of claims 1 or 2, characterised in that they exhibit a tensile strength in the lengthwise direction (MDTS) and the lower of the two tensile strengths in the diagonal directions (TS45) which are such that : (MDTS) + (TS45) $\leq$ 36 kg/mm$^2$ (353.2 MPa) and an elongation at break in the lengthwise direction (MDEB) and the higher of the two elongations at break in the diagonal directions (EB45) which are such that : (MDEB) + (EB45) $\geq$ 320 %.

4. The films according to one of claims 1 to 3, characterised in that the tensile strength in the lengthwise direction (MDTS) and the lower of the two tensile strengths in the diagonal directions (TS45) are such that : (MDTS) + (TS45) $\geq$ 25 kg/mm$^2$ (245.2 MPa) and the elongation at break in the lengthwise direction (MDEB) and the higher of the two elongations at break in the diagonal directions (EB45) are such that : (MDEB) + (EB45) $\leq$ 420 %.

5. The films according to one of claims 1 to 4,
characterised in that they have a crystallinity higher than or equal to 52 %.

6. The films according to one of claims 1 to 5,
characterised in that the polyterephthalate of an alkylenediol is selected from the polyterephthalate of ethylene glycol or of 1,4-butanediol, and the copolyesters comprising at least 80 mol % of alkylene glycol terephthalate units.

7. The films according to one of claims 1 to 6,
characterised in that in the centre of the machine width the refractive index in the lengthwise direction (machine direction) $n_{MD}$, in the transverse direction $n_{TD}$, and in the direction normal to the plane of the film $n_Z$, are such that they correspond to the relationships :

$$\Delta n_{1.2} / \Delta P \geq 0.200 \qquad (1)$$

$$\Delta n_{2.3} + \Delta P \leq 0.304 \qquad (2)$$

- $\Delta n_{1.2}$ in the relationship (1) denoting the difference between the indices $n_1$ et $n_2$,
- $\Delta n_{2.3}$ in the relationship (2) denoting the difference between the indices $n_2$ et $n_3$,

$n_1$, $n_2$, and $n_3$ corresponding to $n_{TD}$, $n_{MD}$ and $n_Z$ respectively when the indices are measured in the center of the machine width.

8. A process for the preparation of a film made of polyterephthalate of an alkylenediol according to one of claims 1 to 7, characterised in that the polyterephthalate of an alkylenediol used has a viscosity value measured according to ISO Standard 1628-5 comprised between 55 ml/g and 75 ml/g, in that the film is biaxially drawn with a planar draw ratio lower than or equal to 12, and in that it is heat-set at a temperature higher than or equal to 227°C.

9. The process according to claim 8, characterised in that the suitable planar draw ratio is obtained with a lengthwise draw ratio of 2.0 to 4.0 and preferably of 2.5 to 3.5.

10. The process according to one of claims 8 or 9,
characterised in that the suitable planar draw ratio is obtained with a transverse draw ratio of 3.0 to 5.0 and preferably of 3.5 to 4.5.

11. The process according to one of claims 8 to 10,
characterised in that the heat-setting of the film after the biaxial drawing is conducted at a temperature of 235°C to 260°C for a period of a few seconds.

12. The process according to one of claims 8 to 11,
characterised in that the polyterephthalate of an alkylenediol used is a polyterephthalate of ethylene glycol whose viscosity value is comprised between 58 ml/g and 70 ml/g.